# EUROPÄISCHE PATENTSCHRIFT

(11) **EP 0 511 977 B1**
(45) Veröffentlichungstag und Bekanntmachung des Hinweises auf die Patenterteilung: **02.03.1994**
(21) Anmeldenummer: 91901770.7
(22) Anmeldetag: 20.12.1990
(51) Int. Cl.: B25J 9/00, B25J 11/00

(54) **MEHRACHSIGER INDUSTRIEROBOTER**
MULTI-AXIS INDUSTRIAL ROBOT
ROBOT INDUSTRIEL A PLUSIEURS AXES

(30) Priorität: 23.01.1990 DE 4001885
(43) Veröffentlichungstag der Anmeldung: 11.11.1992
(73) Patentinhaber: KUKA Schweissanlagen & Roboter GmbH, D-86165 Augsburg (DE)
(72) Erfinder: ZIMMER, Ernst, D-8904 Friedberg (DE)
(74) Vertreter: Ernicke, Hans-Dieter, Dipl.-Ing.
(86) Internationale Anmeldenummer: EP9002268
(87) Internationale Veröffentlichungsnummer: WO9111299

(56) Entgegenhaltungen:
- EP-A- 0 172 603
- WO-A-86/04009
- DE-A- 2 908 523
- DE-A- 3 506 146
- DE-A- 3 526 076
- FI-B- 73 902
- SE-B- 460 268
- US-A- 4 636 138

## Beschreibung

Die Erfindung betrifft einen mehrachsigen Industrieroboter, der aus einem Gestell, einer mit dem Gestell dreh- und schwenkbar verbundenen, einarmig ausgebildeten Schwinge und einem endseitig an der Schwinge gelagerten schwenkbaren Ausleger besteht. Zu der Anordnung gehört ferner noch eine mehrgliedrige, mit dem Ausleger schwenk- und/oder drehbar verbundene Roboterhand, deren Glieder von am Ausleger angeordneten Motoren angetrieben sind.

Ein solcher Industrieroboter ist aus der DE-A 29 08 523 bekannt. Für die Antriebshand sind zwei oder drei Antriebsmotoren vorgesehen, die in einer Reihe übereinander am Ausleger angeordnet sind. Mit dieser Motoranordnung ergibt sich ein relativ großer Störkantenradius des Auslegers bei Drehungen um seine Schwenkachse. Die Schwinge muß dann zur Vermeidung von Kollisionen eine entsprechend große Baulänge haben. Dies wiederum ist häufig unerwünscht, da für komplizierte Bewegungsabläufe der Roboter möglichst kompakt aufgebaut sein soll.

Mit der bekannten Motoranordnung sind auch Probleme hinsichtlich des Massenausgleiches verbunden. Bei dem aus der DE-A 29 08 523 bekannten Roboter sind die Massen von Schwinge, Ausleger, Motoren und Roboterhand ungleichmäßig bezüglich der Schwingendrehachse verteilt. Bei einer Drehung der Schwinge und der weiteren damit verbundenen Roboterteile gegenüber dem relativ ortsfesten Gestell können Unwuchten auftreten. Die ungleichmäßige Massenverteilung kann auch Schwierigkeiten bei Anfahr- und Bremsvorgängen mit sich bringen. Dies zwingt zu einer größeren Dimensionierung des Antriebs und der Bremsen, was zu Lasten der angestrebten kompakten und wirtschaftlichen Bauform geht.

Aus der US-C 4 636 138 ist ein weiterer Industrieroboter mit der eingangs genannten Grundbauform der einseitig gelagerten Schwinge bekannt. Der in der US-Schrift gezeigte Roboter baut besonders voluminös und schwergewichtig. Für die Schwenkbewegungen der Schwinge samt Ausleger gegenüber dem Gestell ist ein Massenausgleich vorgesehen, für den Zusatzgewichte verwendet werden. Die Zusatzgewichte wie auch die Schwinge nebst Ausleger sind andererseits aber mit erheblichem Abstand zur Drehachse zwischen Schwinge und Gestell angeordnet. Der Massenausgleich bezüglich der Schwenkachse der Schwinge sorgt also für eine erhöhte Unwucht bezüglich der Drehachse der Schwinge. An der Schwenkachse der Schwinge sind zwei konzentrisch ineinander steckende Antriebswellen vorgesehen, was eine Verlagerung des Zusatzgewichtes und einen besseren Massenausgleich verhindert. Am Ausleger sind aus getriebetechnischen Gründen drei Antriebsmotoren in einem Dreieck angeordnet.

Es ist Aufgabe der vorliegenden Erfindung, bei einem mehrachsigen Industrieroboter den Massenausgleich, insbesondere am Ausleger, zu verbessern in Verbindung mit einem niedrigen Bauaufwand und einer hohen Traglast.

Die Erfindung löst diese Aufgabe mit den Merkmalen im Kennzeichenteil des Hauptanspruchs.

Die erfindungsgemäße Anordnung der Motoren ermöglicht in Verbindung mit einer einarmigen Schwinge einen besseren Massenausgleich bezüglich der Drehachse, um die die Schwinge sich mit dem Ausleger dreht. Es empfiehlt sich hierbei für eine weitestgehende Optimierung des Massenausgleichs den Schwerpunkt der Motorenanordnung mit Abstand von der Schwinge und jenseits ihrer Drehachse anzuordnen. Dem gleichen Ziel dient auch die bevorzugte achsymmetrische Motoranordnung.

Im weiteren ergibt sich bei Verwendung eines über Kopf schwenkbaren Auslegers der Vorteil, daß die Motorengruppe in der Höhe kompakter baut und dafür entsprechend weiter . von der Schwenkachse des Auslegers entfernt angeordnet werden kann, ohne einen größeren Schwenkradius zu beanspruchen. Hierdurch ist ein besserer Massenausgleich um die Ausleger-Schwenkachse erzielbar, ohne daß die Schwinge verlängert werden muß, um genügenden Freiraum für die Auslegerdrehungen zur Verfügung zu stellen.

Der bessere Massenausgleich ermöglicht seinerseits eine Erhöhung der zulässigen Traglast des Industrieroboters trotz einseitiger Lagerung des Auslegers an der Schwinge. Der einarmige Schwingenaufbau und die einseitige Lagerung verringern ihrerseits den Bauaufwand.

Die kompakte Anordnung der Motoren erlaubt im weiteren, die Antriebswellen der Roboterhand als Gelenkwellen auszubilden und z. B. direkt auf die Motorachsen aufzustecken. Die vorbekannte Fächeranordnung brachte größere Winkelunterschiede zwischen den Antriebswellen und den Motorachsen mit sich und bedingte die Anordnung von Zwischenwellen und Zwischenlagern. Mit der erfindungsgemäßen Motoranordnung sind die Winkel verkleinert, so daß man diese Zwischenteile auf Wunsch einsparen und den Bauaufwand verringern kann. Insgesamt wird der erfindungsgemäße Industrieroboter durch die verschiedenen Einsparungen kostengünstiger und wartungsfreundlicher.

Weitere Vorteile der gelenkigen Wellenanordnung bestehen in der gleichartigen Ausbildung der Antriebswellen und der Verwendung gleicher Wellenteile. Die Gelenkwellen lassen sich ferner leicht wuchten und bieten einen ruhigen Lauf selbst bei hohen Drehzahlen.

Die erfindungsgemäße Motorenanordnung ist für zwei oder mehr Motoren vorgesehen. In den Ausführungsbeispielen sind verschiedene Realisierungsmöglichkeiten mit unterschiedlicher Zahl und Anordnung der Motoren vorgesehen. Beispielsweise können bei Bedarf vier oder mehr Motoren und Antriebswellen unter Beibehaltung der genannten Vorteile am Ausleger angeordnet sein.

Üblicherweise besitzt eine Roboterhand drei Achsen mit ebensovielen Motoren, die aus Gründen des Massenausgleichs bezüglich der Schwingen-Drehachse und der Ausleger-Schwenkachse in einem liegenden gleichschenkligen Dreieck angeordnet sind. Je nach Ausrichtung des Dreiecks wird einmal der Massenausgleich und einmal der Bauaufwand stärker optimiert. In der bevorzugten Ausführungsform weist die Basis des Dreiecks zum Auslegerlager, was bei ausreichendem Massenausgleich den Bauaufwand durch eine einfachere Lagerausbildung optimiert.

Zur weiteren Verbesserung des Massenausgleichs um die Schwingen-Drehachse ist die Schwinge mit einer Kröpfung versehen. Bevorzugt wird diese so groß gewählt, daß bei einer Dreieranordnung der Motoren die beiden lagernahen Motoren mit der Drehachse der Schwinge möglichst in einer gemeinsamen Ebene liegen.

Die Motoren können in konventioneller Ausrichtung am Ausleger mit Abstand hinter dessen Schwenkachse befestigt sein. Sie liegen dann eng aneinander, um möglichst viel Höhe zu sparen und dafür Abstand von der Auslegerschwenkachse zu gewinnen.

Die erfindungsgemäße Motorverteilung ermöglicht es aber auch, die Motoren umgedreht anzustecken, um dadurch den Ausleger möglichst kompakt und kurz bauen zu können. Dies bietet den Verteil einer größeren Beweglichkeit, wobei der Massenausgleich über das Gegengewicht der Umlenkgetriebe und ggf. durch Zusatzmassen erreicht wird. Ferner lassen sich auch bei umgekehrter Motorausrichtung Gelenkwellen mit den vorbeschriebenen Vorteilen einsetzen.

Die vergrößerte Beweglichkeit kommt vor allem in Verbindung mit einem zweiteiligen Schwingenaufbau zum Tragen. In diesem Fall ist die Drehachse als sogenannte Schwingen-Drehachse zwischen den beiden Schwingenteilen vorgesehen. Die vorgenannte Konzeption läßt sich aber auch mit einer konventionellen Bauart verbinden, bei der die Schwinge nicht in sich drehbar, sondern nur mittelbar über das Gestell drehbar ist. In diesem Fall ist als Drehachse der Schwinge die Gestell-Drehachse oder erste Grundachse anzusehen, um die sich die Gestellgabel mit allen nachfolgenden Baugruppen gegenüber dem Untergrund drehen kann.

Als dritte Möglichkeit kommt auch eine Kombination beider Bauformen in Frage, die sowohl eine Schwingen-Drehachse, wie auch eine Gestell-Drehachse vorsieht. Dies ergibt einen siebenachsigen Industrieroboter mit überragender Beweglichkeit.

Der geteilte Schwingenaufbau und die Verlegung der Drehachse in die Schwinge ermöglichen auch einen besseren Massenausgleich der Schwinge selbst. Der Drehantrieb für diese Schwingen-Drehachse kann dann möglichst weit nach unten und hinter die horizontale Schwenkachse verlegt werden, um die die Schwinge gegenüber dem Gestell schwenkt.

Insgesamt ist ein Roboter mit geteilter Schwinge optimal hinsichlich der bewegten Massen bei minimalem Bauaufwand und maximaler Beweglichkeit ausgeglichen. Durch die minimierten Abmessungen können auch zwei derartige Roboter unmittelbar nebeneinander positioniert werden und erreichen auch schwer zugängliche Stellen, wie beispielsweise verborgene Winkel im Kofferraum einer Fahrzeugkarosserie. Roboter dieser Bauart können auch hinter Wandöffnungen positioniert werden, ohne daß ihr Arbeitsbereich und ihre Beweglichkeit allzusehr beschnitten werden, wie das bei konventionellen Konstruktionen der Fall ist.

In den Unteransprüchen sind weitere vorteilhafte Ausgestaltungen des erfindungsgemäßen Industrieroboters angegeben.

Die Erfindung ist in den Zeichnungen beispielsweise und schematisch dargestellt. Im einzelnen zeigen
- Fig. 1 und 2:: einen Industrieroboter mit im Dreieck angeordneten Motoren und einteiliger Schwinge in perspektivischer Ansicht und in Seitenansicht gemäß Pfeil II,
- Fig. 3 und 4:: eine Variante des Industrieroboters von Fig. 1 und 2 mit geteilter und in sich drehbarer Schwinge in perspektivischer Darstellung und in Seitenansicht gemäß Pfeil IV,
- Fig. 5 und 6:: Anordnungsvarianten des Industrieroboters von Fig 3 und 4,
- Fig. 7:: eine Variante des Industrieroboters von Fig. 1 bis 4 mit Gestell-Drehachse und Schwingen-Drehachse,
- Fig. 8 - 11:: Anbauvarianten der Motoren am Ausleger und
- Fig. 12:: eine vergrößerte Detaildarstellung der Motoren in Umkehrstellung mit Umlenkgetriebe und Gelenkwellen entsprechend Fig. 3 bis 7.

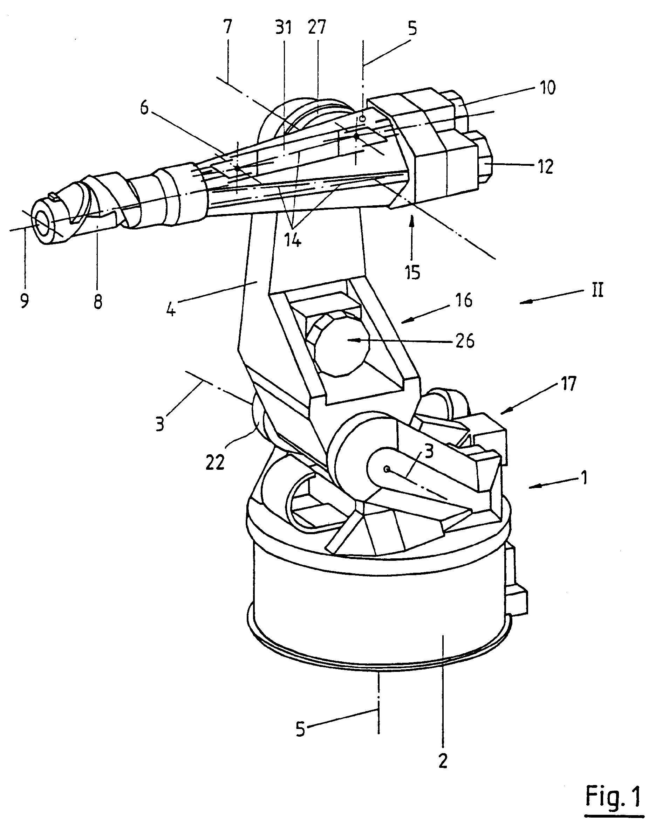

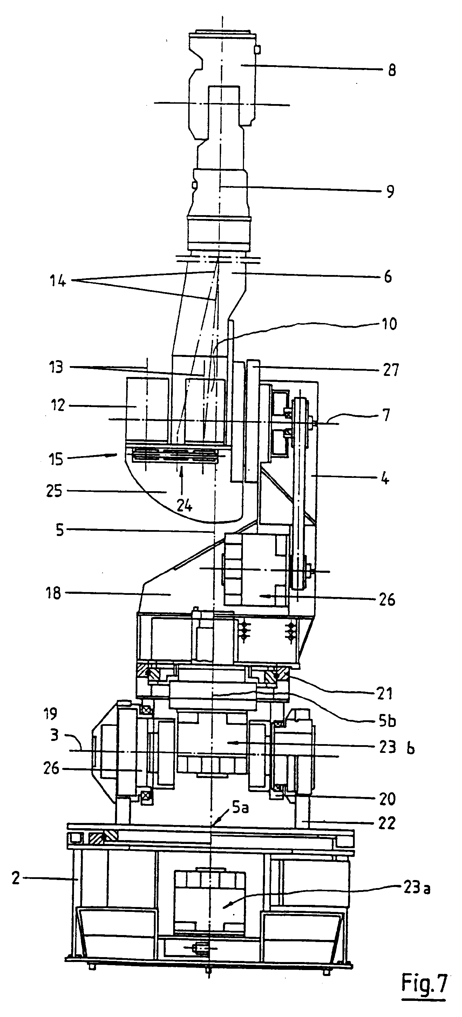

Der in den Zeichnungen stehend dargestellte Industrieroboter (1) besteht aus einem Gestell (2), einer Schwinge (4), einem Ausleger (6) sowie einer Roboterhand (8) und besitzt in Fig. 1 bis 6 sechs rotatorische Achsen und in Fig. 7 sieben Achsen.' Alternativ kann der Industrieroboter in beliebiger Stellung angeordnet sein, indem er beispielsweise an einem Portal hängt oder seitlich an einer Wand befestigt ist.

Die Achsen werden in Schwenk- und Drehachsen unterschieden, wobei die Schwenkachsen bei der gezeigten stehenden Roboteranordnung quer zur Erstreckung der Roboterbaugruppen und in der Regel horizontal verlaufen. Die Schwenkwinkel sind meist auch begrenzt. Die Drehachsen erstrecken sich hingegen längs der zugehörigen Roboterbaugruppen bzw. in der Vertikalen. Sie gestatten in der Regel größere Drehwinkel als die Schwenkachsen.

Die Schwinge (4) kann sich um eine oder mehrere Achsen drehen. Für den Massenausgleich ist vor allem die der Schwenkachse (7) des Auslegers (6) nächstgeordnete Achse relevant, die in der Beschreibung einheitlich als Drehachse (5) bezeichnet wird. Nachfolgend wird dieser einheitliche Begriff für die verschiedenen Ausführungsbeispiele erläutert.

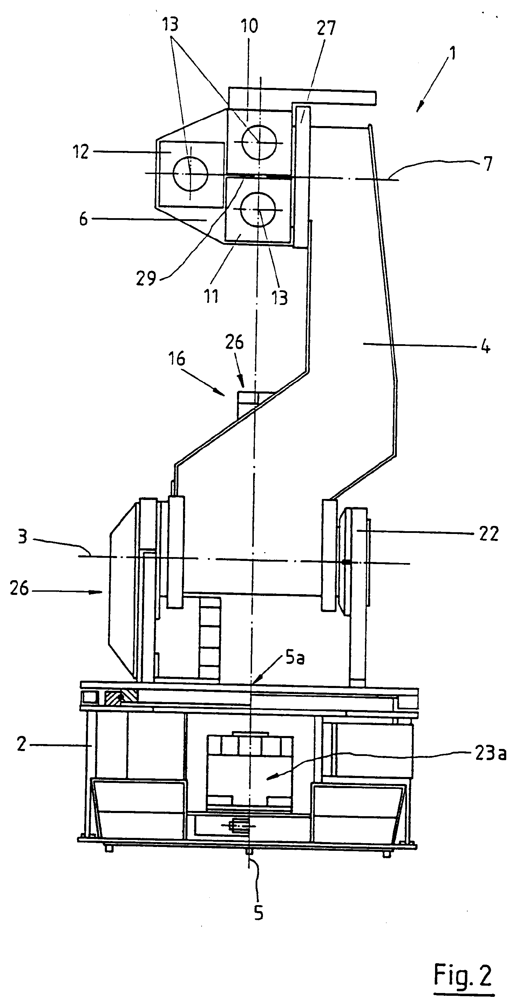

In Fig. 1 und 2 ist die Schwinge (4) einteilig und dreht sich mit Teilen (Gestellgabel 22) des Gestells (2) um die Gestell-Drehachse (5a) gegenüber dem Untergrund. Als Drehachse (5) ist hier die die Gestell-Drehachse (5a) anzusehen.

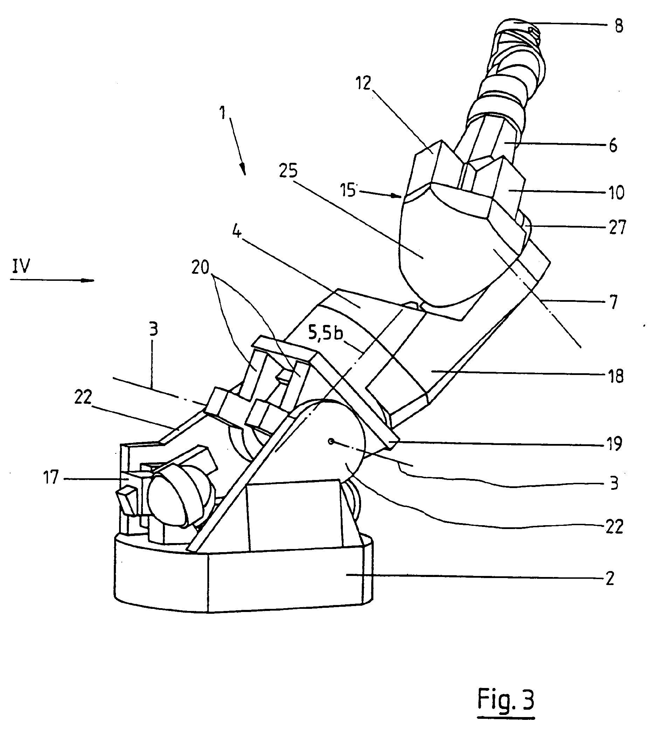

Das Ausführungsbeispiel der Fig. 3 bis 6 zeigt demgegenüber eine Abwandlung mit einer in sich quer in zwei Teile (18,19) unterteilten Schwinge (4). In diesem Fall ist das Gestell (2) ortsfest am Untergrund befestigt und die beiden Schwingenteile (18,19) können sich um eine zwischen ihnen längsverlaufende Schwingen-Drehachse (5b) gegeneinander verdrehen. Die Drehachse (5) besteht hier aus der Schwingen-Drehachse (5b).

In Fig. 7 ist eine zweiachsige Mischform dargestellt, die sowohl eine Gestell-Drehachse (5a), wie auch eine geteilte Schwinge (4) mit einer Schwingen-Drehachse (5b) aufweist. Als Drehachse (5) wird hier die Schwingen-Drehachse (5b) bezeichnet.

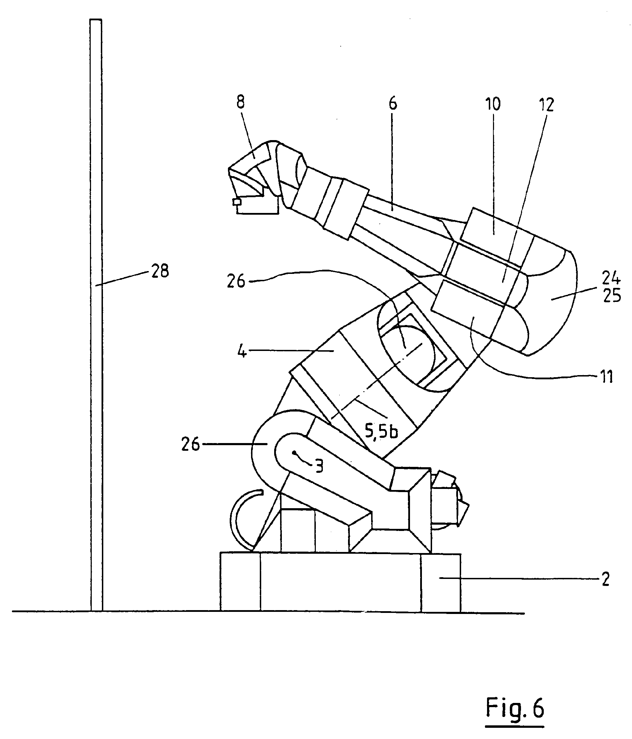

Die Schwinge (4) ist in allen Ausführungsbeispielen um eine horizontale Schwenkachse (3) am Gestell (2) in einer Gestellgabel (22) schwenkbar gelagert. Die Schwenkachse (3) ist aus der Gestellmitte zum Rand versetzt, was dem Industrieroboter (1) eine Vergrößerung des Arbeitsfeldes und mehr Freiraum im Fußbereich, beispielsweise gegenüber einer Wand (28) einbringt (vgl. Fig. 6).

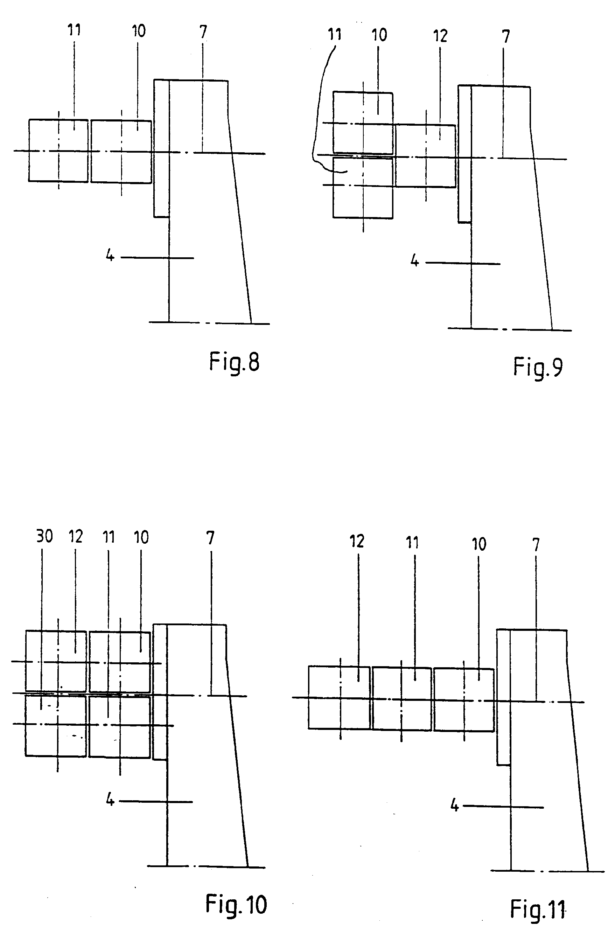

Die Schwinge (4) ist einarmig ausgebildet und weist im unteren Bereich eine seitliche Kröpfung (16) auf. Am oberen Schwingenende ist der Ausleger (6) um eine Schwenkachse (7) einseitig an der Schwinge (4) gelagert. Der Ausleger (6) kann vorzugsweise über Kopf schwenken und besitzt einen großen Schwenkbereich von ca. 250-300°. Am Ende des Auslegers (6) ist die Roboterhand (8) angeordnet, die in Fig. 1 bis 7 über drei Achsen verfügt. In den Varianten von Fig. 8 bis 11 sind es zwei, drei oder vier Achsen.

Die Roboterhand (8) kann hinsichtlich ihrer Kinematik unterschiedlich aufgebaut sein. In den gezeigten Ausführungsbeispielen handelt es sich um eine Winkelhand mit verschränkten Achsen oder um eine zentral aufgebaute Gelenkhand. In den Zeichnungen ist von den drei Achsen die Drehachse (9) dargestellt, die sich längs des Auslegers (6) erstreckt und um die die Roboterhand (8) sich in Streckstellung endlos drehen kann.

Zu den Handachsen gehören genau soviele Antriebswellen (14), die sich im Gehäuseinneren des Auslegers (6) erstrecken und in den Zeichnungen strichpunktiert dargestellt sind. Jede Antriebswelle (14) ist mit einem eigenen Motor (10,11,12,30) verbunden.

In allen Ausführungsbeispielen sind die Motoren (10,11,12,30) längs des Auslegers (6) parallel ausgerichtet, wobei mindestens zwei Motoren (10,11,12,30) in Erstreckungsrichtung der Schwenkachse (7) nebeneinander angeordnet sind. Damit kommt bei entsprechender Kröpfung (16) der Schwerpunkt (29) der Motoranordnung gegenüber dem Schwenklager (27) jenseits der Drehachse (5) zu liegen.

Gemäß Fig. 1 bis 7, 9 und 12 sind drei Motoren (10,11,12) räumlich so verteilt, daß ihre Motorachsen (13) in der Projektion gesehen ein liegendes gleichschenkliges Dreieck bilden. In Fig. 1 bis 7 und 12 sind zwei Motoren (10,11) übereinander und in direkter Nachbarschaft zum Lager (27) des Auslegers (6) an der Schwinge (4) angeordnet, während der dritte Motor (12) seitlich und mittig neben den beiden sitzt. Die Basis des Dreiecks weist in diesem Fall zum Lager (27). Fig. 9 zeigt die umgedrehte Dreiecks-Anordnung mit der Spitze zum Lager (27). Die erste Bauform ermöglicht eine einfachere und schwächere Gestaltung des Lagers (27) unter Inkaufnahme eines geringeren Schwerpunktabstands der Motoranordnung von der Drehachse (5). Die zweite Bauform vergrößert diesen Abstand zu Lasten eines höheren Lageraufwands.

In beiden Ausführungen ist das Dreieck außerdem symmetrisch zur Schwenkachse (7) ausgerichtet, wobei die Motorachse (13) des einzelnen Motors (12) die Schwenkachse (7) schneidet und die beiden anderen achssymmetrisch verlaufen. Fig. 2 zeigt diese Motoranordnung von hinten. Diese Symmetrie wirkt sich günstig auf den Massenausgleich für vertikale Auslegerstellungen aus.

Fig. 8, 10 und 11 zeigen weitere Varianten hinsichtlich Zahl und Anordnung der Motoren (10,11,12,30). Sind nur zwei Motoren (10,11) vorgesehen, werden diese in der vorbeschriebenen Lage und Ausrichtung zur Schwenkachse (7) angeordnet. In gleicher Weise können drei Motoren (10,11,12) auch in einer Reihe nebeneinander liegen. Vier Motoren (10,11,12,30) sind in Form eines achssymmetrischen Rechtecks angeordnet.

Mit der räumlichen Verteilung sind nur noch ein oder zwei Motoren (10,11) in einer Reihe übereinander angeordnet und besitzen zusammen eine geringere Bauhöhe als die vorbekannte fächerartige Anordnung dreier Motoren in einer Reihe übereinander. Dementsprechend hat der Ausleger (6) an der Schwinge (4) mehr Platz für Schwenkbewegungen über Kopf. Es kann nun wahlweise die Schwinge (4) gegenüber dem Stand der Technik verkürzt oder bei gleichbleibender Schwingenlänge der Abstand der Motoren (10,11,12,30) von der Schwenkachse (7) vergrößert und damit der Massenausgleich am Ausleger (6) verbessert werden. Der gezeigte Industrieroboter (1) besitzt trotz einseitiger Lagerung des Auslegers (6) eine zulässige Tragkraft von z.B. 120 kp an der Roboterhand (8).

In Fig. 1 und 2 sind die Motoren (10,11,12) in konventioneller Weise mit der Abtriebsseite (15) zur Roboterhand (8) angeordnet und sitzen am Ende des Auslegers (6) mit Abstand hinter dem Lager (27). Hier kann der Massenausgleich in der vorbeschriebenen Weise durch Vergrößerung des Abstands von der Schwenkachse (7) verbessert werden. Die Antriebswellen (14) sind bei der kompakten Dreieck- oder Viereckanordnung der Motoren (10,11,12,30) direkt auf die Motorachsen (13) aufgesteckt. Sie sind dazu als Gelenkwellen (31) mit Kardangelenken ausgebildet und benötigen keine Zwischenwellen und Zwischenlager (vgl. Fig 1).

Im Ausführungsbeispiel der Fig. 3 bis 6, 7 und 12 sind die Motoren (10,11,12) in umgedrehter Lage angeordnet. Ihre Abtriebsseite (15) weist in diesem Fall zum rückwärtigen Ende des Auslegers (6). Die Motoren (10,11,12) sind etwa in Höhe der Schwenkachse (7) außenseitig auf dem Gehäuse des Auslegers (6) befestigt und besitzen dementsprechend einen gewissen gegenseitigen Abstand. Zur Verbindung mit den Antriebswellen (14) ist auf der Abtriebsseite (15) jedem Motor (10,11,12) ein Umlenkgetriebe (24), vorzugsweise in Form eines Zahnriementriebes, zugeordnet. Die Umlenkgetriebe (24) können zugleich die erste Untersetzungsstufe bilden. Alternativ ist auch eine Übersetzung 1:1 möglich.

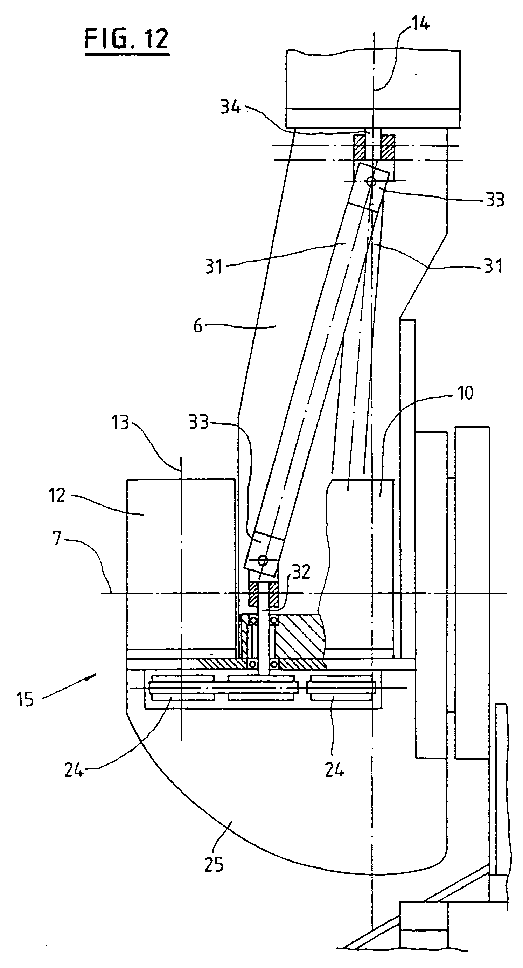

Die Antriebswellen (14) können auch bei umgedrehter Motoranordnung als Gelenkwellen (31) mit jeweils zwei Kardangelenken (33) ausgebildet sein. Fig. 12 verdeutlicht diese Anordnung. Die Umlenkgetriebe (24) besitzen abtriebsseitig kurze Verbindungswellen (32), die zur Roboterhand (8) weisen und eigenständig gelagert sind. Die Gelenkwellen (31) sind am einen Ende auf die Verbindungswellen (32) aufgesteckt. Auf der anderen Seite setzen sich die Gelenkwellen (31) in gerade Wellenabschnitte (34) fort, die zunächst für den Anschluß der Gelenkwellen (31) nebeneinander angeordnet und gelagert sind. Im weiteren Verlauf zur Roboterhand (8) werden die Wellenabschnitte (34) zu konzentrischen Wellen zusammengeführt (nicht dargestellt).

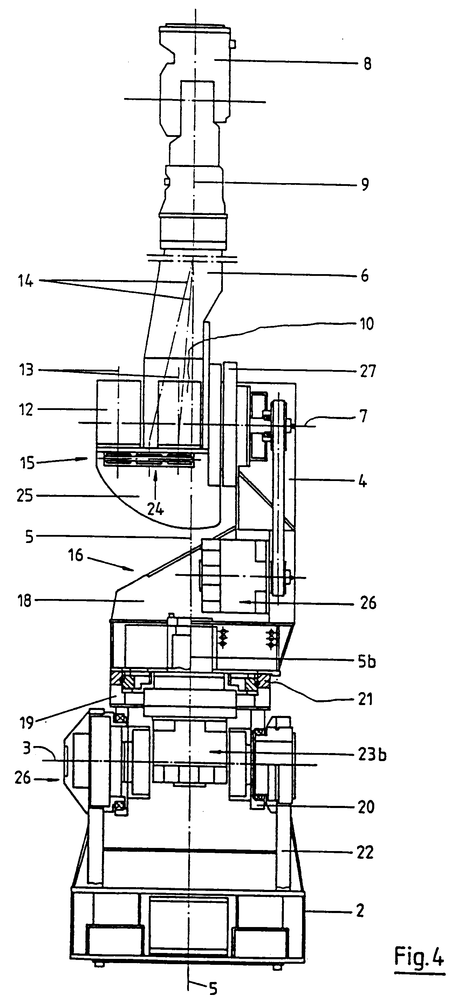

Die Umlenkgetriebe (24) sind von einem Gehäuse (25) umgeben, dessen Außenkontur in Form eines Kugelabschnitts gestaltet ist. Der Kugelabschnitt hat seinen Mittelpunkt auf dem Schnittpunkt der Schwenkachse (7) mit der Drehachse (5) gemäß Fig. 4. Die Umlenkgetriebe (24) mit dem Gehäuse (25), das als Zusatzmasse ausgebildet sein kann, kompensieren den Massenausgleichsverlust durch die nach vorn zur Schwenkachse (7) verlegten Motoren (10,11,12). Bei dieser Motoranordnung kann der Ausleger (6) besonders kurz bauen.

Im Ausführungsbeispiel der Fig. 1 und 2 ist die Kröpfung (16) so groß gewählt, daß die beiden Motoren (10,11) bzw. deren Motorachse (13) mit der Drehachse (5), hier in Gestalt der Gestell-Drehachse (5a), in einer gemeinsamen Ebene liegen. Der dritte Motor (12) liegt seitlich versetzt und bietet bezüglich der Drehachse (5) einen gewissen Massenausgleich zur Schwinge (4).

Die Kröpfung (16) befindet sich im unteren Bereich der Schwinge (4), die als geschweißte Kastenkonstruktion ausgebildet ist. An der Schwinge (4) ist im Bereich der Kröpfung (16) auch der Motor für den Schwenkantrieb (26) des Auslegers (6) angeordnet und dabei ungefähr in der vorerwähnten Ebene durch die Drehachse (5) positioniert. Zum Massenausgleich befindet sich auch der Schwenkantrieb (26) für die Schwenkachse (3) auf der der Schwinge (4) gegenüberliegenden Seite der Gestellgabel (22).

Der Drehantrieb (23a) für die Gestell-Drehachse (5a) sitzt mittig im Gestell (2). Nachdem die bewegten Massen der Schwinge (4), des Auslegers (6), der Roboterhand (8) und der daran befindlichen Last nicht vollständig ausgeglichen werden können, ist an der Gestellgabel (22) noch eine Ausgleichsvorrichtung (17) angeordnet, die auf die Schwinge (4) einwirkt.

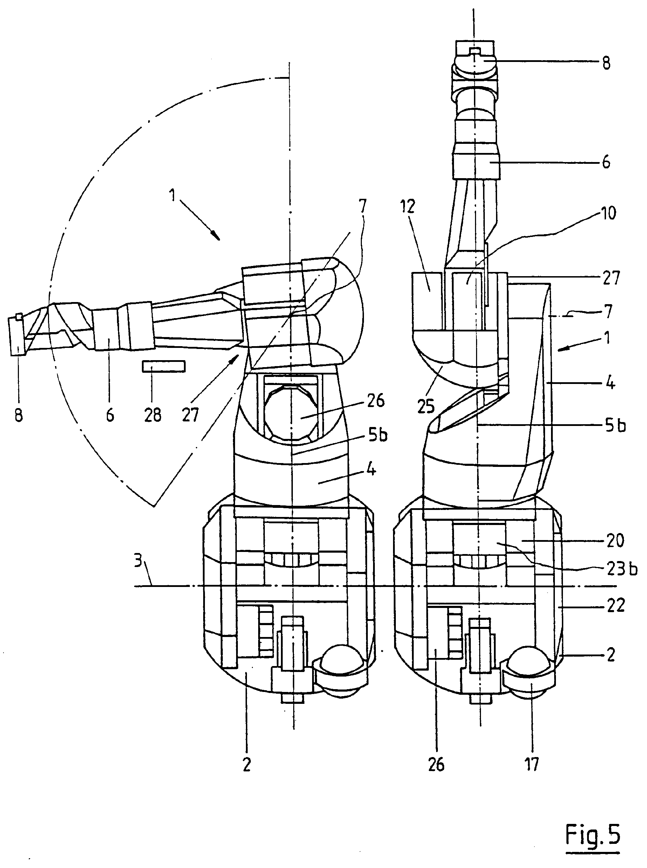

Fig. 4 zeigt den Industrieroboter (1) in Streckstellung. In diesem Ausführungsbeispiel ist die Schwinge (4) in ein Oberteil (18) und ein Unterteil (19) quer geteilt. Die beiden Teile (18,19) sind durch ein Drehlager (21) unter Bildung der Schwingen-Drehachse (5b) miteinander drehbar verbunden. Die Schwingen-Drehachse (5b) ist in dieser Ausbildung wirkungsmäßig der Schwenkachse (3) nachgeordnet. Wie Fig. 5 verdeutlicht, kann sich hierdurch das Oberteil (18) mit dem Ausleger (6) drehen, was der Roboterhand (8) einen zumindest halbkugelförmigen Arbeitsbereich ohne Veränderung der Schwenkstellung der Schwinge (4) gegenüber dem Gestell (2) verleiht.

Gemäß Fig. 5 können zwei Industrieroboter (1) dadurch mit minimalem Abstand unmittelbar nebeneinander angeordnet werden und getrennt arbeiten, ohne sich gegenseitig zu behindern. Das Gestell (2) kann auch hinter einem Pfosten oder in einer Maueröffnung angeordnet sein, was in Fig. 5 durch die kleine Wand (28) angedeutet ist.

Die kurze Bauweise des Auslegers (6) mit den umgedreht angeordneten Motoren (10,11,12) und dem kugelabschnittsförmigen Gehäuse (25) verringert ebenfalls die Behinderungsgefahr. In Streck- und in Querstellung gemäß Fig. 5 steht das rückwärtige Ende des Auslegers (6) kaum über den Außenumriß der Schwinge (4) und des Gestells (2) vor. Jeder der beiden Industrieroboter (1) kann dadurch ohne Kollisionsgefahr mit dem anderen nach seiner Seite arbeiten.

Durch Schwenkbewegungen der Schwinge (4) um die Schwenkachse (3) werden die vorerwähnten zumindest halbkugelförmigen Arbeitsbereiche zu einem wulst- oder reifenförmigen Arbeitsraum erweitert.

Wie Fig. 4 verdeutlicht, ist das Unterteil (19) der Schwinge (4) mit einer Lagergabel (20) versehen, die außenseitig von der Gestellgabel (22) umfaßt und darin drehbar gelagert ist. Im Inneren der Lagergabel (20) entsteht dadurch ein Freiraum, in dem der Drehantrieb (23b) der Schwingen-Drehachse (5b) angeordnet ist. Der Drehantrieb (23b) besteht aus einem Motor und einem Untersetzungsgetriebe, die dadurch in der Nähe der Schwenkachse (3) angeordnet sind. Der Drehantrieb (23b) kann auch in Teilen oder komplett über die Schwenkachse (3) hinaus nach hinten zur weiteren Optimierung des Massenausgleichs der Schwinge (4) verlegt werden. Im gezeigten Ausführungsbeispiel befindet sich das Drehlager (21) oberhalb der Gestellgabel (22). Es kann ebenfalls weiter nach unten verlegt werden.

Fig. 7 zeigt eine Variante mit einer Gestell-Drehachse (5a) als zusätzlicher oder erster Drehachse, die der Schwingen-Drehachse (5b) mittelbar vorgeordnet ist und um die sich die Gestellgabel (22) mit allen nachfolgenden Roboterbaugruppen gegenüber dem Untergrund drehen kann. Die Beweglichkeit dieses siebenachsigen Industrieroboters (1) ist wesentlich erweitert. Es entsteht zuerst durch Schwenkbewegungen des Auslegers (6) und der Schwinge (4) um ihre Schwenkachsen (7,3) bei gleichzeitiger Drehung des Oberteils (18) um die Schwingen-Drehachse (5b) eine Aneinanderreihung kugelförmiger Arbeitsräume. Deren Rotation um die Gestell-Drehachse (5a) ergibt wiederum einen noch größeren kugelförmigen Arbeitsraum.

### STÜCKLISTE

- 1: Industrieroboter, Roboter
- 2: Gestell
- 3: Schwenkachse, Schwinge
- 4: Schwinge
- 5: Drehachse, Schwingendrehung
- 5a: Gestell-Drehachse
- 5b: Schwingen-Drehachse
- 6: Ausleger
- 7: Schwenkachse, Ausleger
- 8: Roboterhand
- 9: Drehachse, Roboterhand
- 10: Motor
- 11: Motor
- 12: Motor
- 13: Motorachse
- 14: Antriebswelle
- 15: Abtriebsseite
- 16: Kröpfung
- 17: Ausgleichsvorrichtung
- 18: Oberteil Schwinge
- 19: Unterteil Schwinge
- 20: Lagergabel
- 21: Drehlager
- 22: Gestellgabel
- 23: Drehantrieb
- 23a: Drehantrieb, Gestell-Drehachse
- 23b: Drehantrieb, Schwingen-Drehachse
- 24: Umlenkgetriebe
- 25: Gehäuse
- 26: Schwenkantrieb
- 27: Lager, Ausleger
- 28: Wand
- 29: Schwerpunkt Motoranordnung
- 30: Motor
- 31: Gelenkwelle
- 32: Verbindungswelle
- 33: Kardangelenk
- 34: Wellenabschnitt

## Patentansprüche

1. Mehrachsiger Industrieroboter, bestehend aus einem Gestell (2), einer mit dem Gestell (2) dreh- und schwenkbar verbundenen, einarmig ausgebildeten Schwinge (4), einem einseitig an der Schwinge (4) gelagerten (27) schwenkbaren Ausleger (6) und einer mehrgliedrigen, mit dem Ausleger (6) schwenk- und/oder drehbar verbundenen Roboterhand (8), deren Glieder von am Ausleger (6) angeordneten Motoren (10,11,12,30) angetrieben sind, wobei mindestens zwei Motoren (10,11,12,30) am Ausleger (6) in Erstreckungsrichtung seiner Schwenkachse (7) nebeneinander angeordnet sind und die Drehachse (5) der Schwinge (4) im Bereich zwischen dem Schwerpunkt (29) der Motoren (10,11,12,30) und dem Schwenklager (27) verläuft.

2. Industrieroboter nach Anspruch 1, dadurch
**gekennzeichnet**, daß die Motoren (10,11,12,30) achssymmetrisch zur Schwenkachse (7) angeordnet sind.

3. Industrieroboter nach Anspruch 1 oder 2, dadurch
**gekennzeichnet**, daß drei oder mehr Motoren (10,11,12,30) räumlich in einem Mehreck verteilt angeordnet sind.

4. Industrieroboter nach Anspruch 3, dadurch
**gekennzeichnet**, daß drei Motoren (10,11,12) mit ihren Motorachsen (13) in einem liegenden gleichschenkligen Dreieck angeordnet sind.

5. Industrieroboter nach Anspruch 4, dadurch
**gekennzeichnet**, daß die Basis des Achsendreiecks zum Lager (27) des Auslegers (6) weist.

6. Industrieroboter nach einem oder mehreren der Ansprüche 1 bis 5, dadurch
**gekennzeichnet**, daß die Schwinge (4) im unteren Bereich eine Kröpfung (16) aufweist.

7. Industrieroboter nach Anspruch 5 oder 6, dadurch
**gekennzeichnet**, daß die dem Lager (27) des Auslegers (6) benachbarten beiden Motoren (10,11) mit der Drehachse (5) der Schwinge (4) in einer gemeinsamen Ebene liegen.

8. Industrieroboter nach einem oder mehreren der Ansprüche 1 bis 7, dadurch
**gekennzeichnet,** daß die Motoren (10,11,12,30) mit ihrer Abtriebsseite (15) zur Roboterhand (8) hinweisend und eng aneinanderliegend sowie mit Abstand hinter dem Lager (27) am Ende des Auslegers (6) angeordnet sind.

9. Industrieroboter nach Anspruch 8, dadurch
**gekennzeichnet**, daß die Antriebswellen (14) als Gelenkwellen (31) ausgebildet und direkt mit den Motorachsen (13) verbunden sind.

10. Industrieroboter nach einem oder mehreren der Ansprüche 1 bis 7, dadurch
**gekennzeichnet**, daß die Motoren (10,11,12,30) umgedreht und mit ihrer Abtriebsseite (15) von der Roboterhand (8) wegweisend in Höhe des Lagers (27) des Auslegers (6) angeordnet sind.

11. Industrieroboter nach Anspruch 10, dadurch
**gekennzeichnet,** daß die Motoren (10,11,12,30) außenseitig und mit gegenseitigem Abstand auf dem Ausleger (6) angeordnet sind.

12. Industrieroboter nach Anspruch 10 oder 11, dadurch
**gekennzeichnet,** daß die Motoren (10,11,12,30) auf der Abtriebsseite (15) über Umlenkgetriebe (24) mit den zur Roboterhand (8) führenden Antriebswellen (14) verbunden sind.

13. Industrieroboter nach Anspruch 12, dadurch
**gekennzeichnet,** daß die Antriebswellen (14) als Gelenkwellen (31) ausgebildet sind.

14. Industrieroboter nach Anspruch 12 oder 13, dadurch
**gekennzeichnet,** daß die Umlenkgetriebe (24) in einem kugelabschnittsförmigen Gehäuse (25) angeordnet sind.

15. Industrieroboter nach einem oder mehreren der Ansprüche 1 bis 14, dadurch
**gekennzeichnet,** daß die Schwinge (4) in zwei Teile (18,19) quergeteilt ist, wobei die beiden Teile (18,19) unter Bildung einer Schwingen-Drehachse (5b) drehbar (21) miteinander verbunden und angetrieben (23b) sind.

16. Industrieroboter nach Anspruch 15, dadurch
**gekennzeichnet**, daß das untere Schwingenteil (19) eine Lagergabel (20) aufweist und schwenkbar (3) in einer Gestellgabel (22) gelagert ist, wobei der Drehantrieb (23b) der Schwingen-Drehachse (5b) im Inneren der Lagergabel (20) angeordnet ist.

17. Industrieroboter nach Anspruch 15 oder 16, dadurch
**gekennzeichnet,** daß das Gestell (2) eine zusätzliche angetriebene (23a) Gestell-Drehachse (5a) aufweist.

## Claims

1. Multi-axis industrial robot, comprising a frame (2), a rocker (4) which is of one-armed construction and is connected rotatably and pivotally to the frame (2), a pivotal arm (6) which is mounted (27) at one side on the rocker (4), and a multi-member robot hand (8) which is connected pivotally and/or rotatably to the arm (6) and whereof the members are driven by motors (10, 11, 12, 30) arranged on the arm (6), at least two motors (10, 11, 12, 30) being arranged next to one another on the arm (6) in the direction in which its pivot axis (7) extends, and the axis of rotation (5) of the rocker (4) running in the region between the centre of gravity (29) of the motors (10, 11, 12, 30) and the pivot bearing (27).

2. Industrial robot according to Claim 1, characterized in that the motors (10, 11, 12, 30) are arranged with axial symmetry with respect to the pivot axis (7).

3. Industrial robot according to Claim 1 or 2, characterized in that three or more motors (10, 11, 12, 30) are arranged spatially distributed in a polygon shape.

4. Industrial robot according to Claim 3, characterized in that three motors (10, 11, 12) are arranged with their motor axes (13) in a horizontal equilateral triangle shape.

5. Industrial robot according to Claim 4, characterized in that the base of the axis triangle shape points towards the bearing (27) of the arm (6).

6. Industrial robot according to one or more of Claims 1 to 5, characterized in that the rocker (4) has a crank shape (16) in the lower region.

7. Industrial robot according to Claim 5 or 6, characterized in that the two motors (10, 11) adjacent the bearing (27) of the arm (6) lie in a common plane with the axis of rotation (5) of the rocker (4).

8. Industrial robot according to one or more of Claims 1 to 7, characterized in that the motors (10, 11, 12, 30) are arranged with their output side (15) pointing towards the robot hand (8) and are arranged bearing closely against one another and at a spacing behind the bearing (27) at the end of the arm (6).

9. Industrial robot according to Claim 8, characterized in that the drive shafts (14) are constructed as cardan shafts (31) and are directly connected to the motor axes (13).

10. Industrial robot according to one or more of Claims 1 to 7, characterized in that the motors (10, 11, 12, 30) are arranged to be rotated and with their output side (15) pointing away from the robot hand (8) at the height of the bearing (27) of the arm (6).

11. Industrial robot according to Claim 10, characterized in that the motors (10, 11, 12, 30) are arranged on the outside and at a mutual spacing on the arm (6).

12. Industrial robot according to Claim 10 or 11, characterized in that the motors (10, 11, 12, 30) are connected on the output side (15) by way of corner gears (24) to the drive shafts (14) leading to the robot hand (8).

13. Industrial robot according to Claim 12, characterized in that the drive shafts (14) are constructed as cardan shafts (31).

14. Industrial robot according to Claim 12 or 13, characterized in that the corner gears (24) are arranged in a housing (25) shaped in the manner of a sphere segment.

15. Industrial robot according to one or more of Claims 1 to 14, characterized in that the rocker (4) is transversely divided into two parts (18, 19), the two parts (18, 19) being driven (23b) and connected rotatably (21) to one another to form a rocker axis of rotation (5b).

16. Industrial robot according to Claim 15, characterized in that the lower rocker part (19) has a bearing fork (20) and is mounted pivotally (3) in a frame fork (22), the rotary drive (23b) of the rocker axis of rotation (5b) being arranged in the interior of the bearing fork (20).

17. Industrial robot according to Claim 15 or 16, characterized in that the frame (2) has an additional driven (23a) frame axis of rotation (5a).

## Revendications

1. Robot industriel à plusieurs axes, constitué par un châssis (2), un élément basculant (4) raccordé au châssis (2) de manière à pouvoir tourner et basculer et formé d'un seul bras, un bras en console pivotant (6) tourillonné (27) unilatéralement sur l'élément basculant (4) et une main de robot (8) formée de plusieurs éléments, qui est raccordée au bras en console (6) de manière à pouvoir basculer et/ou tourner et dont les éléments sont entraînés par des moteurs (10,11,12,30) disposés sur le bras en console (6), et dans lequel au moins deux moteurs (10,11,12,30) sont disposés sur le bras en console (6) côte-à-côte dans la direction dans laquelle s'étend l'axe de basculement (7) du bras en console, et l'axe de rotation (5) de l'élément basculant (4) s'étend dans la zone comprise entre le centre de gravité (29) du moteur (10,11,12,30) et le palier de basculement (27).

2. Robot industriel suivant la revendication 1, caractérisé par le fait que les moteurs (10,11,12,30) sont disposés d'une manière symétrique par rapport à l'axe de basculement (5).

3. Robot industriel suivant la revendication 1 ou 2, caractérisé par le fait que trois ou un plus grand nombre de moteurs (10,11,12,30) sont disposés en étant répartis spatialement dans un polygone.

4. Robot industriel suivant la revendication 3, caractérisé par le fait que les axes (13) de trois moteurs (10,11,12) sont disposés suivant un triangle isocèle horizontal.

5. Robot industriel suivant la revendication 4, caractérisé par le fait que la base du triangle délimité par les axes est dirigée vers le palier (27) du bras en console (6).

6. Robot industriel suivant l'une ou plusieurs des revendications 1 à 5, caractérisé par le fait que l'élément basculant (4) possède, dans sa partie inférieure, une partie coudée (16).

7. Robot industriel suivant la revendication 5 ou 7, caractérisé par le fait que les deux moteurs (10,11), qui sont voisins du palier (27) du bras en console (6) et l'axe de rotation (5) de l'élément basculant (7) sont situés dans un même plan.

8. Robot industriel suivant l'une ou plusieurs des revendications 1 à 7, caractérisé par le fait que les moteurs (10,11,12,30) sont disposés de telle sorte que leur côté entraîné (15) est tourné vers la main (8) du robot et sont disposés très près les uns des autres ainsi qu'à une certaine distance en arrière du palier (27) sur l'extrémité du bras en console (6).

9. Robot industriel suivant la revendication 8, caractérisé par le fait que les arbres d'entraînement (14) sont réalisés sous la forme d'arbres articulés (31) et sont reliés directement aux axes (13) des moteurs.

10. Robot industriel suivant une ou plusieurs des revendications 1 à 7, caractérisé par le fait que les moteurs (10,11,12,30) sont disposés dans une position pivotée et avec leur côté mené (15) tourné à l'opposé de la main (8) du robot, à la hauteur du palier (27) du bras en console (6).

11. Robot industriel suivant la revendication 10, caractérisé par le fait que les moteurs (10,11,12,30) sont disposés sur le côté extérieur et en étant séparés par une distance réciproque, sur le bras en console (6).

12. Robot industriel suivant la revendication 10 ou 11, caractérisé par le fait que les moteurs (10,11,12,30), côté mené (15), sont raccordés, par l'intermédiaire de transmissions de renvoi (24), aux arbres d'entraînement (14), qui aboutissent à la main (8) du robot.

13. Robot industriel suivant la revendication 12, caractérisé par le fait que les arbres d'entraînement (14) sont réalisés sous la forme d'arbres articulés (31).

14. Robot industriel suivant la revendication 12 ou 13, caractérisé par le fait que les transmissions de renvoi (24) sont disposées dans un carter (25) en forme de secteurs sphériques.

15. Robot industriel suivant une ou plusieurs des revendications 1 à 14, caractérisé par le fait que l'élément basculant (4) est divisé transversalement en deux parties (18,19), qui sont reliées entre elles de manière à pouvoir tourner (21) en formant un axe de rotation (5b) de l'élément basculant et sont entraînés (23b).

16. Robot industriel suivant la revendication 15, caractérisé par le fait que la partie inférieure (19) de l'élément basculant possède une fourche de support (20) et est monté de manière à pouvoir basculer (3) dans une fourche (22) du châssis, le dispositif d'entraînement en rotation (23b) de l'axe de rotation (5b) de l'élément basculant étant disposé à l'intérieur de la fourche de support (20).

17. Robot industriel suivant la revendication 15 ou 16, caractérisé par le fait que le châssis (2) possède un axe supplémentaire de rotation (5a), qui est entraîné (23a).
